# EUROPÄISCHE PATENTSCHRIFT

(11) **EP 0 824 562 B1**
(45) Veröffentlichungstag und Bekanntmachung des Hinweises auf die Patenterteilung: **16.01.2002**
(21) Anmeldenummer: 96915010.1
(22) Anmeldetag: 02.05.1996
(51) Int. Cl.: C08G 69/48, D21H 17/55

(54) **VERFAHREN ZUR HERSTELLUNG VERNETZTER KATIONPOLYMERE**
METHOD OF PRODUCING CROSS-LINKED CATIONIC POLYMERS
PROCEDE DE FABRICATION DE POLYMERES CATIONIQUES RETICULES

(30) Priorität: 10.05.1995 DE 19517047
(43) Veröffentlichungstag der Anmeldung: 25.02.1998
(73) Patentinhaber: Cognis Deutschland GmbH, 40589 Düsseldorf (DE)
(72) Erfinder: BIGORRA LLOSAS, Joaquim, E-08203 Sabadell (ES); PI SUBIRANA, Rafael, E-08400 Granollers (ES)
(86) Internationale Anmeldenummer: EP9601825
(87) Internationale Veröffentlichungsnummer: WO9635738

(56) Entgegenhaltungen:
- EP-A- 0 549 925
- EP-A- 0 553 575
- DE-A- 1 520 047
- DE-A- 2 239 647
- DE-A- 2 842 713
- US-A- 3 914 155
- US-A- 5 239 047

## Beschreibung

### Gebiet der Erfindung

Die Erfindung befindet sich auf dem Gebiet der Papierhilfsmittel und betrifft ein neues Verfahren zur Herstellung vemetzter Kationpolymere für die Papierbehandlung,

### Stand der Technik

Unter dem Oberbegriff "Papier" werden ca. 3000 verschiedene Sorten und Artikel verstanden, die sich in ihren Anwendungsgebieten und ihrer Beschaffenheit zum Teil erheblich unterscheiden können. Zu ihrer Herstellung werden wäßrige etwa 1 bis 5 Gew.-%ige Aufschlämmungen von Cellulosefasem in dünnen Schichten auf Bänder aufgebracht, auf denen sie bei ganz erheblichen Laufgeschwindigkeiten und unter Anwendung von Wärme und mechanischem Druck bis zu einem Feststoffgehalt von etwa 40 Gew.-% entwässert werden. Während das noch feuchte Rohpapier in weiteren Schritten getrocknet wird, kehrt das abgepreßte Wasser in den Kreislauf zurück.

In modernen Papiermühlen wird aus ökonomischen und ökologischen Gründen Wert darauf gelegt, den Wasserkreislauf weitgehend geschlossen zu halten. Hierzu ist es natürlich erforderlich, daß das Prozeßwasser möglichst unbelastet von Abfallstoffen ist bzw. sich nur solche Abfallstoffe anreichem, deren Weiterverwendung unproblematisch ist. Ein besonderes Augenmerk liegt dabei auf dem sogenannten AOX-Gehalt des Prozeßwassers, d.h. dem Gehalt an unerwünschten Halogenverbindungen.

Im Rahmen der Papierherstellung ist der Zusatz einer Vielzahl von Additiven jedoch unumgänglich. Hierzu gehören beispielsweise Füllstoffe, Entschäumer, Farbstoffe, Retentionsmittel sowie Hilfsstoffe, die die mechanische Zugbelastbarkeit des Papiers verbessern und - je nach Anwendungsbereich - als "dry" oder "wet strength resins" bezeichnet werden. Da sich die Additive im Laufe der Zeit zusammen mit Cellulosefasern im Prozeßwasser anreichem, besteht ein erhebliches Bedürfnis nach Produkten, die aus ökologischer Sicht möglichst unbedenklich sind.

Zu den Additiven, die in diesem Zusammenhang kritisch gesehen werden können, zahlen insbesondere die wet strength resins, bei denen es sich um vemetzte Polyaminoamide handelt. Zur Herstellung dieser Stoffe, die auch unter der Marke Fibrabones® bekannt sind, geht man von Polyaminoamiden aus, deren Ketten unter Einsatz von Epichlorhydrin über Stickstoffatome vemetzt werden. Aus dem umfangreichen Stand der Technik sei in diesem Zusammenhang auf die US-Patentschriften **US-A-5116887, US-A5120773, US-A-5239047** und **US-A-5350796** (Henkel Corp.) sowie auf die Europäische Patentanmeldung **EP-A1-0553575** (Hercules) verwiesen. Des weiteren ist aus der deutschen Offenlegungsschrift **DE-A-1520047** ein Verfahren zur Herstellung alkylierter Aminopolyamine bekannt, bei dem man Aminopolyamide zunächst mit Dimethylsulfat oder Methyliodid alkyliert und die Reaktionsprodukte dann mit Epichlorhydrin vemetzt.

Es hat sich dabei erwiesen, daß zwischen dem Vemetzungsgrad der wet strength resins und der Verbesserung der Zugbelastbarkeit des damit behandelten Papiers ein direkter Zusammenhang besteht. Aus dieser Sicht ist es empfehlenswert, möglichst alle für eine Verknüpfung zur Verfügung stehenden Stickstoffgruppen im Polyaminoamid über Epichlorhydrineinheiten zu vemetzen. Andererseits führt die Umsetzung jeder Stickstoffgruppe mit Epichlorhydrin zur Abspaltung von Chlorwasserstoff (der als Addukt gebunden bleibt) und somit zu einer AOX-Belastung des Produktes führt, was aus den oben geschilderten Gründen außerordentlich unerwünscht ist. Demzufolge versucht man bislang die beiden gegenläufigen Parameter - Vemetzungsgrad und AOX-Belastung - in der Balance zu halten. Tatsächlich aber sind die Ergebnisse unbefriedigend, da in vielen Fällen weder die anwendungstechnischen Eigenschaften vollauf zufriedenstellend sind noch eine ausreichende ökologische Verträglichkeit der Produkte erreicht werden kann.

Die Aufgabe der Erfindung hat somit darin bestanden, ein Verfahren zur Herstellung von wet strength resins zur Verfügung zu stellen, das frei von den geschilderten Nachteilen ist.

### Beschreibung der Erfindung

Gegenstand der Erfindung ist ein Verfahren zur Herstellung vernetzter Kationpolymere, bei dem man Polyaminoamide
(a) zunächst mit einer Menge von 5 bis 30 Mol-% - bezogen auf den zur Alkylierung zur Verfügung stehenden Stickstoff - 2,3-Epoxypropyltrimethylammoniumchlorid, 3-Chlor- und/oder 3-Brom-2-hydroxypropyltrimethylammoniumchlorid umsetzt, und
(b) anschließend die resultierenden alkylierten Polyaminoamide mit einer dem Gehalt an nichtalkyliertem Stickstoff entsprechenden molaren Menge Epichlorhydrin vemetzt.

Überraschenderweise wurde gefunden, daß man die anwendungstechnischen Eigenschaften der vernetzten Polyamide durch die Quatemierung einer definierten Menge von Stickstoffgruppen im Polymer vor der Vernetzung signifikant verbessem kann, ohne daß dies mit einer zusätzlichen AOX-Belastung des Abwassers verbunden ist.

### Polyaminoamide

Bei den im Sinne der Erfindung als Ausgangsstoffe in Betracht kommenden Polyaminoamiden handelt es sich um handelsübliche Polykondensationsprodukte, die sich von **Dicarbonsäuren** der Formel (I) ableiten,

**HOOC-[A]-COOH** **(I)**

in der A für eine lineare oder verzweigte, aliphatische, cycloaliphatische und/oder aromatische, gegebenenfalls hydroxy- substituierte Alkylengruppe mit 1 bis 52 und vorzugsweise 1 bis 10 Kohlenstoffatomen steht. Typische Beispiele für Dicarbonsäuren, von denen sich die Polyaminoamide ableiten können sind beispielsweise Bemsteinsäure, Azelainsäure, Dodecandisäure, Phthalsäure und technische Dimer- bzw. Trimerfettsäuren. Vorzugsweise handelt es sich um Polyaminoamide auf Basis von Adipinsäure. Weiterhin können sich die als Ausgangsstoffe in Betracht kommenden Polyaminoamide von **Polyaminen** der Formel **(II)** ableiten,

**H**_{**2**}**N-(B)-NH-[(C)NH]**_{**z**}**H (II)**

in der B und C unabhängig voneinander für lineare oder verzweigte, gegebenenfalls hydroxysubstituierte Alkylengruppen mit 1 bis 4 Kohlenstoffatomen und z für 0 oder Zahlen von 1 bis 10 steht. Typische Beispiele sind Polyamine der Formel **(II)**, in denen B und C für Ethylengruppen und z für 2 oder 3 steht. Demzufolge sind die bevorzugt einzusetzenden Polyamine Diethylentriamin und Triethylentetramin. In Summe bevorzugt sind Polyaminoamide auf Basis von Adipinsäure und Diethylentriamin.

### Quaternierung

Bei den als Quatemierungsmittel eingesetzten 2,3-Epoxypropyltrimethylammoniumchlorid sowie 3-Chlor- bzw. 3-Brom-2-hydroxypropyltrimethylammoniumchloride handelt es sich um Handelsprodukte der Degussa AG, Hanau/FRG, die unter der Marke QUAB® vertrieben werden. Zur Durchführung der Quaternierung werden die Polyamidoamine in wäßriger oder alkoholischer Lösung löst und bei Temperaturen im Bereich von 40 bis 70 °C portionsweise mit dem Quatemierungsmittel versetzt. Die Reaktionszeit beträgt dabei üblicherweise 0,5 bis 3 h. Es hat sich als vorteilhaft erwiesen, die Menge des Quatemierungsmittels - 5 bis 30 und vorzugsweise 15 bis 25 Mol-% bezogen auf den für die Quatemierung zur Verfügung stehenden Stickstoff - auf die Aminzahl zu beziehen. Im Anschluß an die Quaternierung hat es sich weiterhin als vorteilhaft erwiesen, den pH-Wert des Zwischenproduktes durch Zugabe von wäßriger Alkalibase auf 9 bis 11 einzustellen.

### Vernetzung

Die Vernetzung der quatemierten Polyaminoamide kann ebenfalls in wäßriger bzw. alkoholischer Lösung erfolgen. Dabei empfiehlt es sich, das Epichlorhydrin portionsweise zuzugeben und die Reaktion wegen der erheblichen Exothermie bei niedrigen Temperaturen im Bereich von 10 bis 40 °C durchzuführen. Die Menge des einzusetzenden Epichlorhydrins entspricht üblicherweise der noch für eine Vernetzung zur Verfügung stehenden molaren Menge an Stickstoffgruppen. Es empfiehlt sich daher aus praktischen Gründen, vor der Vernetzung noch einmal die Aminzahl des quatemierten Produktes zu bestimmen. Im Anschluß an die Epichlorhydrinzugabe wird das Produkt über einen Zeitraum von 12 bis 48 und vorzugsweise 24 bis 36 h gerührt. Gegen Ende der Reaktionszeit empfiehlt es sich die Temperatur bis auf etwa 40 °C anzuheben und die Vernetzung durch Zugabe von Mineralsäure und Einstellung eines pH-Wertes im Bereich von 2 bis 4 abzubrechen, sobald die Viskosität einen kritischen Bereich von etwa 500 mPas (gemessen nach der Brookfield-Methode, 40 °C, Spindel 1) erreicht hat.

### Gewerbliche Anwendbarkeit

Die nach dem erfindungsgemäßen Verfahren erhältlichen vemetzten Kationpolymere verleihen Papier eine verbesserte Zugbelastbarkeit bei niedriger AOX-Belastung. Produkte des Stands der Technik weisen demgegenüber entweder eine vergleichbare Verbesserung der Zugbelastbarkeit bei höherer AOX-Belastung oder umgekehrt eine schlechtere Zugbelastbarkeit bei vergleichbarer AOX-Belastung auf.

### Beispiele

**Herstellbeispiel H1.** In einer 1-1-Rührapparatur wurden 450 g eines Polyaminoamids auf Basis Adipinsäure und Diethylentriamin (Amin zahl 101 mg KOH/g entsprechend 0,81 Äquivalenten Stickstoff, Verkaufsprodukt der Henkel Corp., Gulph Mills/US) in 100 ml Wasser suspendiert und portionsweise mit 44 g (0,2 mol) 2,3-Epoxytrimethylammoniumchlorid (70 Gew.-%ig in Wasser, QUAB® 151, Degussa AG, Hanau/FRG) versetzt. Nach Beendigung der Zugabe wurde die Reaktionsmischung über einen Zeitraum von 2 h auf 60 °C erhitzt. Anschließend wurde die Mischung auf 17 °C abgekühlt und der pH-Wert durch Zugabe 50 Gew.-%iger Natriumhydroxidlösung auf 9,5 bis 10 eingestellt. Das resultierende Intermediat besaß eine Aminzahl von 81 mg KOH/g. Zur Vernetzung wurde die Reaktionsmischung mit weiteren 115 ml Wasser versetzt und portionsweise mit 80 g (0,96 mol) Epichlorhydrin versetzt, so daß die Temperatur nicht über 20 °C anstieg. Anschließend wurde der Ansatz über einen Zeitraum von 36 h bei 30 °C gerührt. Anschließend wurde auf 40 °C erwärmt und die Mischung weiter gerührt, bis eine ausreichende Viskosität von etwa 500 mPas erreicht wurde. Danach wurde die Reaktion durch Zugabe von wäßriger Salzsäure und Einstellen auf einen pH-Wert von 2 bis 3 abgebrochen. Das resultierende vernetzte Kationpolymer besaß einen Trockenrückstand von 13 Gew.-%.

**Herstellbeispiel H2** (nicht erfindungsgemäß). Analog zu Beispiel 1 wurden wiederum 450 g des Polymers aus Beispiel 1 bei 40 °C in 150 ml Wasser suspendiert, anstelle des QUAB wurden jedoch zur Quaternierung 25,6 g (0,2 mol) Dimethylsulfat eingesetzt. Nach Beendigung der Zugabe wurde die Reaktionsmischung wieder für 2 h auf 60 °C erhitzt, anschließend auf 17 °C abgekühlt und mit Natronlauge auf einen pH-Wert von etwa 9,5 eingestellt; die Aminzahl betrug 66,2 mg KOH/g. Zur Vernetzung wurde die Reaktionsmischung wurde unter Zugabe von 42 ml Wasser verdünnt und bei einer Temperatur von 20 bis 35 °C mit 70,7 g (0,76 mol) Epichlorhydrin versetzt. Die Reaktionszeit betrug 25 h. Anschließend wurde der Ansatz - analog zu Beispiel 1 - bis zum Erreichen einer Viskosität von etwa 500 mPas erwärmt und durch Zugabe von wäßriger Salzsäure auf einen pH-Wert von etwa 2,5 eingestellt. Der Trockenrückstand betrug 13 Gew.-%.

**Anwendungstechnische Beispiele.** Das erfindungsgemäße Produkt H1, das nicht erfindungsgemäße Produkt H2, sowie ein handelsübliches, nicht quatemiertes Marktproduct der Hercules Inc. wurden im folgenden als 13 Gew.-%ige wäßrige Lösungen eingesetzt. Für die anwendungstechnische Beurteilung wurde zunächst eine wäßrige Aufschlämmung von 1200 g Cellulosefasem (Gewichtsverhältnis kurze/lange Fasem = 70 : 30) in 6 I Wassern hergestellt. Jeweils 250 ml dieser Pasten wurden mit 5 bzw. 10 Gew.-% der Testlösungen - bezogen auf Trockensubstanz - versetzt, 2 min gerührt und ausgestrichen. Das noch feuchte Rohpapier wurde schließlich über einen Zeitraum von 30 min bei 105 °C getrocknet. Papierstreifen einer Breite von 15 mm (Gewicht der Muster ca. 2 g, Papiergewicht ca. 55 g/m²) wurden auf ihre Zugfestigkeit untersucht. Die Ergebnisse sind in Tabelle 1 zusammengefaßt; angegeben ist die Kraft bis zum Reißen des Papiers als Mittel von 5 Messungen:

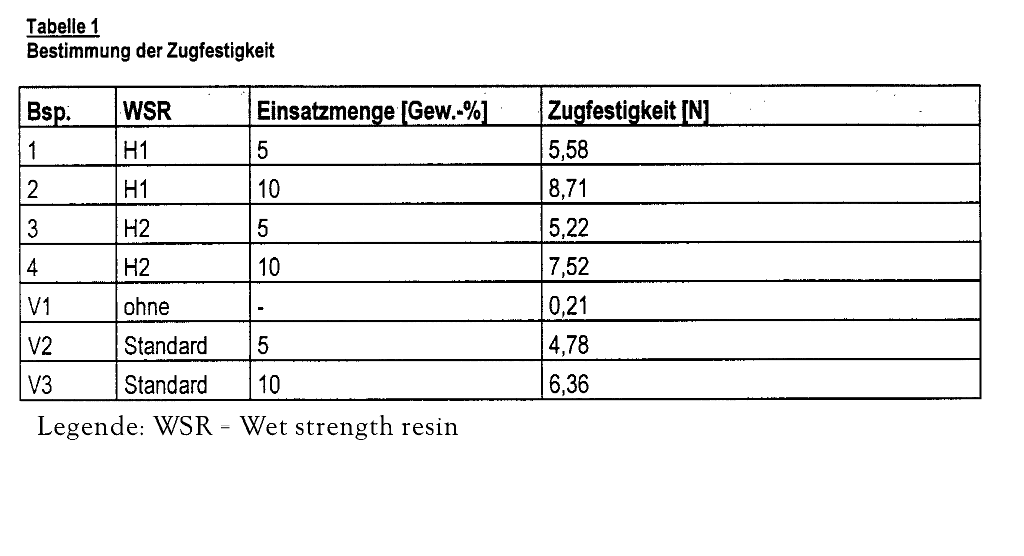

## Patentansprüche

1. Verfahren zur Herstellung vemetzter Kationpolymere, bei dem man Polyaminoamide
(a) zunächst mit einer Menge von 5 bis 30 Mol-% - bezogen auf den zur Alkylierung zur Verfügung stehenden Stickstoff - 2,3-Epoxypropyltrimethylammoniumchlorid, 3-Chlor- und/oder 3-Brom-2-hydroxypropyltrimethylammoniumchlorid umsetzt, und
(b) anschließend die resultierenden alkylierten Polyaminoamide mit einer dem Gehalt an nichtalkyliertem Stickstoff entsprechenden molaren Menge Epichlorhydrin vernetzt.

2. Verfahren nach Anspruch 1, **dadurch gekennzeichnet, daß** man Polyaminoamide einsetzt, die sich von Dicarbonsäuren der Formel **(I)** ableiten,
**HOOC-[A]-COOH (I)**
in der A für eine lineare oder verzweigte, aliphatische, cycloaliphatische und/oder aromatische, gegebenenfalls hydroxysubstituierte Alkylengruppe mit 1 bis 52 Kohlenstoffatomen steht.

3. Verfahren nach den Ansprüchen 1 und 2, **dadurch gekennzeichnet, daß** man Polyaminoamide einsetzt, die sich von Polyaminen der Formel **(II)** ableiten,
**H**_{**2**}**N-(B)-NH-[(C)NH]**_{**z**}**H (II)**
in der B und C unabhängig voneinander für lineare oder verzweigte, gegebenenfalls hydroxysubstituierte Alkylengruppen mit 1 bis 4 Kohlenstoffatomen und z für 0 oder Zahlen von 1 bis 10 steht.

4. Verfahren nach den Ansprüchen 1 bis 3, **dadurch gekennzeichnet, daß** man die Alkylierung bei Temperaturen im Bereich von 40 bis 70°C durchführt.

5. Verfahren nach den Ansprüchen 1 bis 4, **dadurch gekennzeichnet, daß** man die Vernetzung bei Temperaturen im Bereich von 10 bis 40°C durchführt.

## Claims

1. A process for the production of crosslinked cationic polymers, in which polyaminoamides
(a) are first reacted with a quantity of 5 to 30 mol-%, based on the nitrogen available for alkylation, of 2,3-epoxypropyl trimethyl ammonium chloride, 3-chloro- and/or 3-bromo-2-hydroxypropyl trimethyl ammonium chloride and
(b) the resulting alkylated polyaminoamides are then crosslinked with a molar quantity of epichlorohydrin corresponding to the content of non-alkylated nitrogen.

2. A process as claimed in claim 1, **characterized in that** polyaminoamides derived from dicarboxylic acids corresponding to formula **(I):**
**HOOC-[A]-COOH (I)**
in which A is a linear or branched, aliphatic, cycloaliphatic and/or aromatic, optionally hydroxysubstituted alkylene group containing 1 to 52 carbon atoms,
are used.

3. A process as claimed in claims 1 and 2, **characterized in that** polyaminoamides derived from polyamines corresponding to formula **(II):**
**H**_{**2**}**N-(B)-NH-[(C)NH]**_{**z**}**H (II)**
in which B and C independently of one another represent linear or branched, optionally hydroxysubstituted alkylene groups containing 1 to 4 carbon atoms and z = 0 or a number of 1 to 10,
are used.

4. A process as claimed in claims 1 to 3, **characterized in that** the alkylation is carried out at temperatures of 40 to 70°C.

5. A process as claimed in claims 1 to 4, **characterized in that** the crosslinking step is carried out at temperatures of 10 to 40°C.

## Revendications

1. Procédé pour la préparation de polymères cationiques réticulés, dans lequel
(a) on fait d'abord réagir des polyaminoamides avec une quantité de 5 à 30 % en moles - par rapport à l'azote disponible pour l'alkylation - de chlorure de 2,3-époxypropyitriméthylammonium, de chlorure de 3-chloro- et/ou 3-bromo-2-hydroxypropyltriméthylammonium et
(b) les polyaminoamides alkylés résultants sont ensuite réticulés avec une quantité molaire d'épichlorhydrine correspondant à la teneur en azote non alkylé.

2. Procédé selon la revendication 1,
**caractérisé en ce qu'**
on utilise des polyaminoamides qui dérivent d'acides dicarboxyliques de formule (I)
HOOC-[A]-COOH (I)
dans laquelle A représente un groupe alkylène linéaire ou ramifié, aliphatique, cycloallphatique et/ou aromatique, éventuellement substitué par un groupe hydroxy, ayant de 1 à 52 atomes de carbone.

3. Procédé selon les revendications 1 et 2,
**caractérisé en ce qu'**
on utilise des polyaminoamides qui dérivent de polyamines de formule (II)
H₂N-(B)-NH-[(C)NH]_{z}H (II)
dans laquelle B et C représentent, indépendamment l'un de l'autre, des groupes alkylène linéaires ou ramifiés, éventuellement substitués par des groupes hydroxy, ayant de 1 à 4 atomes de carbone, et z représente 0 ou les nombres de 1 à 10.

4. Procédé selon les revendications 1 à 3,
**caractérisé en ce qu'**
on effectue l'alkylation à des températures dans la plage de 40 à 70°C.

5. Procédé selon les revendications 1 à 4,
**caractérisé en ce qu'**
on effectue la réticulation à des températures dans la plage de 10 à 40°C.
